# EUROPÄISCHE PATENTSCHRIFT

(11) **EP 2 728 194 B1**
(45) Veröffentlichungstag und Bekanntmachung des Hinweises auf die Patenterteilung: **12.10.2016**
(21) Anmeldenummer: 13190776.8
(22) Anmeldetag: 30.10.2013
(51) Int. Cl.: F04D 19/04, F04D 29/058, F04D 29/08, F16C 32/04

(54) **VAKUUMPUMPE SOWIE VERFAHREN ZUR HERSTELLUNG EINER VAKUUMPUMPE**
VACUUM PUMP AND METHOD OF MANUFACTURING THE SAME
POMPE À VIDE ET MÉTHODE DE FABRICATION D'UNE POMPE À VIDE

(30) Priorität: 31.10.2012 DE 102012219982
(43) Veröffentlichungstag der Anmeldung: 07.05.2014
(73) Patentinhaber: PFEIFFER VACUUM GMBH, 35614 Asslar (DE)
(72) Erfinder: Antonacci, Marco, 35582 Wetzlar (DE); Mekota, Mirko, 35630 Ehringshausen (DE)
(74) Vertreter: Manitz, Finsterwald & Partner GbR

(56) Entgegenhaltungen:
- EP-A1- 0 413 851
- DE-A1- 10 022 061
- DE-A1-102008 035 891
- DE-T2- 69 101 162

## Beschreibung

Die vorliegende Erfindung betrifft eine Vakuumpumpe, insbesondere eine Turbomolekularpumpe, und eine Rotationseinheit für eine Vakuumpumpe, insbesondere für eine Turbomolekularpumpe.

Vakuumpumpen und insbesondere Turbomolekularpumpen, die zur Erzeugung eines hochreinen Vakuums eingesetzt werden, umfassen üblicherweise eine Rotationseinheit mit einem Stator und mit einem Rotor, der gegenüber dem Stator drehend angetrieben wird. Insbesondere bei Turbomolekularpumpen zur Erzeugung eines hochreinen Vakuums wird der Rotor dabei typischerweise mit sehr hohen Drehzahlen drehend angetrieben.

Zur drehbaren Lagerung des Rotors gegenüber dem Stator werden üblicherweise zwei Lager verwendet, die ein auf der Hochvakuumseite, das heißt im Bereich des Pumpeneinlasses der Pumpe, angeordnetes Lager und ein weiteres, vorvakuumseitiges, d.h. im Bereich des Pumpenauslasses angeordnetes, Lager umfassen. Da das im Bereich der Hochvakuumseite vorgesehene Lager mit dem zu evakuierenden Volumen in Verbindung steht, muss dieses Lager verschmutzungsfrei ausgeführt sein, um eine Verschmutzung des zu evakuierenden Volumens bzw. der darin enthaltenen Medien möglichst vollständig zu vermeiden.

Das an der Hochvakuumseite vorgesehene Lager wird deshalb häufig als Permanentmagnetlager ausgeführt, welches ein rotorseitiges Lagerteil und ein statorseitiges Lagerteil umfasst, die jeweils durch einen rotorseitigen bzw. statorseitigen Magnetringstapel gebildet sind. Der rotorseitige und der statorseitige Magnetringstapel sind dabei konzentrisch ineinander angeordnet, so dass die radialen Innen- und Außenflächen der Magnetringstapel einander gegenüberliegende Seitenflächen bilden, die einen magnetischen Spalt definieren. Die magnetische Abstoßung zwischen dem rotorseitigen und dem statorseitigen Magnetringstapel im Bereich dieses Spalts bewirkt dabei die gegenseitige drehbare Lagerung des Rotors und des Stators.

Bei bekannten Pumpen dieser Art besteht das Problem, dass durch eindringende Moleküle eine Verringerung der durch das Magnetlager ausgeübten Lagerkräfte und damit der Tragfähigkeit des Magnetlagers eintritt. Dies führt zu einer Verschlechterung der Lagerung und folglich zu einer Beeinträchtigung der Laufeigenschaften der Pumpe während des Betriebs. Die Abnahme der Lagerkräfte kann auf den während des Betriebs der Vakuumpumpe auftretenden Kontakt der Magnetringe des Permanentmagnetlagers mit den geförderten Medien und Gasen zurückgeführt werden, welcher zu Beschädigungen der Magnetringe und zu einer Verringerung der von dem Magnetringen erzeugten Magnetfeldstärke führt. Insbesondere führt der Kontakt der Magnetringe mit den geförderten Gasen zu einer Korrosion des Materials der Magnetringe und zu einem Materialabtrag an den Magnetringen, das heißt einem physischen Verlust von Magnetringmaterial. Ferner kann insbesondere durch den Kontakt mit Wasserstoff eine Versprödung des Magnetringmaterials auftreten, welche einen Materialabtrag begünstigt und ebenfalls zu einer Verringerung der Magnetfeldstärke und damit der Lagerkräfte führt.

DE10022061A1 offenbart eine Vakuumpumpe gemäß dem Oberbegriff des Anspruchs 1.

Aufgabe der Erfindung ist es, eine Vakuumpumpe und eine Rotationseinheit für eine Vakuumpumpe anzugeben, welche jeweils eine verschmutzungsfreie und gleichzeitig dauerhaft zuverlässige und tragfähige drehbare Lagerung des Rotors gegenüber dem Stator aufweisen. Aufgabe der Erfindung ist ferner die Angabe eines Verfahrens zur Herstellung einer solchen Vakuumpumpe bzw. Rotationseinheit.

Die Aufgabe wird durch eine Vakuumpumpe mit den Merkmalen des Anspruchs 1 sowie durch ein Verfahren zur Herstellung einer Vakuumpumpe gemäß dem Anspruch 8 gelöst.

Gegenstand der Erfindung sind eine Vakuumpumpe, insbesondere eine Turbomolekularpumpe, und eine Rotationseinheit für eine Vakuumpumpe, insbesondere für eine Turbomolekularpumpe, wobei die Vakuumpumpe bzw. Rotationseinheit einen Rotor, einen Stator und ein Magnetlager aufweist. Das Magnetlager umfasst einen rotorseitigen Lagerteil und einen statorseitigen Lagerteil, die einander gegenüberliegende Seitenflächen aufweisen. Die Vakuumpumpe bzw. Rotationseinheit umfasst eine gasdichte Kapselung für den rotorseitigen Lagerteil und/oder eine gasdichte Kapselung für den statorseitigen Lagerteil. Die jeweilige Kapselung umfasst eine Schutzwand, die zwischen den einander gegenüberliegenden Seitenflächen der Lagerteile angeordnet ist.

Die Schutzwand der Kapselung schützt dabei die Seitenfläche des gekapselten rotorseitigen bzw. statorseitigen Lagerteils vor dem Kontakt mit den durch die Vakuumpumpe geförderten Medien. Die Schutzwand kann dabei die jeweilige Seitenfläche zumindest teilweise und insbesondere im Wesentlichen vollständig abdecken, um den Kontakt der Seitenfläche mit den von der Pumpe geförderten Medien zu verhindern. Dadurch werden eine infolge des Kontakts des Materials des rotorseitigen bzw. statorseitigen Lagerteils mit diesen Medien hervorgerufene Beschädigung des Lagerteils und eine daraus resultierende Verschlechterung der Lagerung verringert und bevorzugt vollständig vermieden. Es wurde erkannt, dass eine solche Schutzwand vorgesehen werden kann, ohne dass die Schutzwand die gegenseitige magnetische Beeinflussung und magnetische Abstoßung der Lagerteile wesentlich beeinflusst, so dass durch die Schutzwand selbst keine Beeinträchtigung der Lagerwirkung erfolgt.

Die Langzeitstabilität der durch das Magnetlager ausgeübten Lagerkräfte und der Tragfähigkeit des Magnetlagers wird durch die Kapselung folglich erheblich gesteigert. Somit wird eine Vakuumpumpe bzw. eine Rotationseinheit für eine Vakuumpumpe geschaffen, die eine langfristig zuverlässige, stabile und wirksame magnetische Lagerung und dementsprechend gleichbleibend gute Laufeigenschaften aufweist.

Vorteilhafte Ausführungsformen sind in den Unteransprüchen, der Beschreibung und den Figuren beschrieben.

Die vorliegende Erfindung bezieht sich gleichermaßen auf eine Vakuumpumpe und auf eine Rotationseinheit einer solchen Vakuumpumpe, d.h. die den Rotor und den Stator enthaltende Baugruppe einer solchen Vakuumpumpe. Wenn im Nachfolgenden die vorteilhaften Ausführungsformen der Erfindung unter Bezugnahme auf eine Vakuumpumpe erläutert sind, sind diese Erläuterungen, soweit anwendbar, auch auf die Anwendung der Erfindung auf eine Rotationseinheit für eine Vakuumpumpe zu beziehen. Ebenso ist, wenn hierin allgemein Bezug auf eine "Vorrichtung" genommen wird, darunter eine Vakuumpumpe, wie insbesondere eine Turbomolekularpumpe, ebenso zu verstehen wie eine Rotationseinheit für eine Vakuumpumpe, insbesondere für eine Turbomolekularpumpe.

Vorzugsweise umfasst die Vakuumpumpe sowohl eine gasdichte Kapselung für den rotorseitigen Lagerteil als auch eine gasdichte Kapselung für den statorseitigen Lagerteil, wobei die Kapselungen jeweils eine Schutzwand umfassen, die zwischen den einander gegenüberliegenden Seitenflächen der Lagerteile angeordnet ist und eine Seitenfläche des jeweils gekapselten Lagerteils vor dem Kontakt mit den von der Pumpe geförderten Medien schützt. Wenn nachstehend allgemein Bezug auf eine Kapselung genommen wird, ist die zugehörige Beschreibung, soweit anwendbar und nicht anders angegeben, gleichermaßen auf eine Kapselung für den rotorseitigen Lagerteil oder eine Kapselung für den statorseitigen Lagerteil zu beziehen und bezieht sich vorzugsweise sowohl auf eine Kapselung für den rotorseitigen Lagerteil als auch auf eine Kapselung für den statorseitigen Lagerteil der Vakuumpumpe. Prinzipiell kann die gasdichte Kapselung für den rotorseitigen Lagerteil einen Teil des Rotors bilden und die gasdichte Kapselung für den statorseitigen Lagerteil kann einen Teil des Stators bilden.

Das Magnetlager ist vorzugsweise als Permanentmagnetlager ausgebildet, wobei der rotorseitige und der statorseitige Teil des Lagers bevorzugt jeweils durch ein oder mehrere permanentmagnetische Lagerelemente gebildet sind, die die einander gegenüberliegenden Seitenflächen des Magnetlagers bilden. Das zwischen den Seitenflächen der Lagerteile vorhandene Magnetfeld bewirkt dabei die gegenseitige Beeinflussung und Abstoßung des rotorseitigen und statorseitigen Lagerteils und somit die gewünschte Lagerwirkung.

Bevorzugt deckt die Schutzwand der Kapselung die Seitenfläche des zugehörigen Lagerteils zumindest bereichsweise und insbesondere im Wesentlichen über die gesamte Seitenfläche hinweg gasdicht ab, so dass die Seitenfläche nicht mit den von der Pumpe geförderten Medien in Kontakt kommt. Die Schutzwand liegt dabei vorzugsweise zumindest in einem Bereich der Seitenfläche und vorzugsweise über die gesamte Seitenfläche hinweg direkt an der Seitenfläche an, und zwar insbesondere derart, dass die betreffenden Bereiche der Seitenfläche durch den direkten Kontakt mit der Schutzwand gasdicht verschlossen werden. Die Schutzwand kann auch einen Hohlraum abdichten, in dem ein Teil der Seitenfläche oder vorzugsweise die gesamte Seitenfläche angeordnet ist bzw. der von einem Teil der Seitenfläche oder der gesamten Seitenfläche begrenzt wird. In diesem Fall kann die Schutzwand prinzipiell auch zumindest bereichsweise nicht direkt an der Seitenfläche anliegen, sondern von der Seitenfläche beabstandet sein.

Gemäß einer vorteilhaften Ausführungsform bildet die Kapselung einen geschlossenen gasdichten Aufnahmeraum, in dem der rotorseitige bzw. der statorseitige Lagerteil aufgenommen ist. Durch eine solche gasdicht geschlossene Einhausung kann der jeweilige Lagerteil vollständig vor dem Kontakt mit den von der Pumpe geförderten Medien geschützt werden. Der Aufnahmeraum wird dabei bevorzugt ganz oder teilweise durch die Schutzwand der Kapselung begrenzt.

Gemäß der Erfindung ist die Schutzwand durch eine Hülse gebildet, welche vorzugsweise im Wesentlichen koaxial zu dem Magnetlager angeordnet ist. Die Hülse ist vorzugsweise im Wesentlichen rotationssymmetrisch zu der Rotationsachse der Pumpe ausgebildet. Eine solche Hülse lässt sich besonders einfach realisieren und an der Pumpe montieren und befestigen. Eine solche Hülse eignet sich außerdem besonders, um die Seitenfläche eines z.B. durch einen zylindermantelförmigen Magnetringstapel gebildeten Lagerteils vor den geförderten Medien zu schützen und beeinträchtigt dabei weder die Laufeigenschaften noch die Lagerung der Pumpe.

Prinzipiell kann die Kapselung mehrteilig ausgebildet sein und insbesondere mehrere Teile umfassen, die zur Bildung eines gasdicht geschlossenen Aufnahmeraums gasdicht miteinander verbunden sind.

Gemäß der Erfindung ist die Hülse von einem Träger für den rotorseitigen oder statorseitigen Lagerteil getragen. Dabei kann der rotorseitige oder statorseitige Lagerteil von dem Träger getragen bzw. an dem Träger in zumindest einer Richtung festgelegt sein, insbesondere in zumindest einer radialen und/oder axialen Richtung. Ein solcher Träger eignet sich besonders dazu, eine stabile Halterung bzw. Festlegung der Hülse in einer genau definierten Position gegenüber dem Lagerteil zu erreichen. Die Hülse ist dabei vorzugsweise direkt von dem Träger getragen bzw. an diesem befestigt. Dadurch wird eine besonders stabile Ausgestaltung der Kapselung erreicht.

Der Träger für den rotorseitigen oder statorseitigen Lagerteil kann einen Teil der Kapselung für den jeweiligen Lagerteil bilden. Der Träger kann dazu mit der Hülse einen wie vorstehend beschriebenen gasdicht geschlossenen Aufnahmeraum bilden, in dem der rotorseitige oder der statorseitige Lagerteil aufgenommen ist.

Gemäß einer vorteilhaften Ausführungsform bildet die Hülse mit dem Träger zumindest eine gasdichte Verbindung. Eine solche gasdichte Verbindung kann beispielsweise einen wie vorstehend beschriebenen, durch die Hülse und den Träger definierten Aufnahmeraum für den jeweiligen Lagerteil gasdicht verschließen. Gemäß einer Ausführungsform bildet die Hülse mit dem Träger zwei in axialer Richtung voneinander beabstandete gasdichte Verbindungen, die jeweils ringförmig um die Rotationsachse der Pumpe umlaufen und zwischen denen sich ein gasdicht geschlossener Aufnahmeraum der Kapselung mit dem darin aufgenommenen Lagerteil erstreckt. Die gasdichten Verbindungen können dabei vorzugsweise im Bereich der axialen Enden der Hülse bzw. des Aufnahmeraums angeordnet sein.

Eine gasdichte Verbindung kann zum Beispiel durch eine direkte dichtende Verbindung zwischen der Hülse und dem Träger gewährleistet werden, beispielsweise durch eine dichtende Anlage der Hülse und des Trägers aneinander. Ebenso kann zwischen der Hülse und dem Träger zumindest ein Dichtungselement, wie insbesondere ein O-Ring, angeordnet sein, an dem die Hülse und der Träger jeweils dichtend anliegen, so dass über das Dichtungselement eine dichte Verbindung zwischen dem Hülse und dem Träger gebildet wird.

Prinzipiell ist die Hülse vorzugsweise durch eine oder mehrere feste mechanische Verbindungen an dem Träger befestigt und bildet gleichzeitig eine oder mehrere gasdichte Verbindungen mit dem Träger. Eine Verbindung zwischen der Hülse und dem Träger kann dabei als reine feste mechanische Verbindung oder als reine gasdichte Verbindung ausgebildet sein, d.h. die mechanische Verbindung und die gasdichte Verbindung können unabhängig voneinander realisiert sein. Es kann aber auch zumindest eine Verbindung vorgesehen sein, welche sowohl eine feste mechanische Befestigung der Hülse an dem Träger als auch eine gasdichte Verbindung zwischen der Hülse und dem Träger schafft.

Gemäß einer vorteilhaften Ausführungsform ist die Hülse durch eine Fügeverbindung und/oder eine Verschraubung mit dem Träger verbunden. Eine solche Verbindung ist besonders geeignet, um eine sichere Befestigung der Hülse an dem Träger und/oder eine gasdichte Verbindung zwischen der Hülse und dem Träger zu gewährleisten. Insbesondere eine Fügeverbindung kann dabei gleichzeitig eine feste mechanische und eine gasdichte Verbindung zwischen der Hülse und dem Träger schaffen, welche sowohl im Hinblick auf die mechanische Festigkeit und die Gasdichtheit dauerhaft stabil und zuverlässig ist.

Eine Fügeverbindung kann beispielsweise dadurch realisiert sein, dass die Hülse in einem Schrumpf- oder Presssitz an dem Träger angebracht und insbesondere befestigt ist. Die in dem jeweiligen Verbindungsbereich angeordneten und gegeneinander gepressten Oberflächen der Hülse und des Trägers können dabei infolge ihres gegenseitigen Anpressdrucks einen mechanischen Reibschluss bilden, der eine mechanische Befestigung bewirkt, und/oder eine Flächenpressung, die eine spaltfreie Anlage der Oberflächen aneinander und somit eine gasdichte Verbindung schafft. Bevorzugt umfasst eine solche Fügeverbindung zwei insbesondere flächig aneinander gepresste Oberflächen der Hülse und des Trägers, welche vorzugsweise eine Oberflächennormale aufweisen, die in radialer Richtung orientiert ist oder zumindest eine radiale Richtungskomponente aufweist. Eine solche radiale Fügeverbindung führt zu einer besonders stabilen und zuverlässigen Verbindung zwischen der Hülse und dem Träger.

Zur Herstellung einer wie vorstehend beschriebenen Fügeverbindung kann die Hülse in dem betreffenden Abschnitt ein geringes Übermaß gegenüber dem Träger aufweisen, insbesondere in radialer Richtung, so dass die Hülse und der Träger unter einer mechanischen Spannung stehen, welche eine zuverlässige Verbindung zwischen der Hülse und dem Träger gewährleistet.

Eine wie vorstehend beschriebene Fügeverbindung kann auch unter Verwendung einer thermischen Behandlung der Hülse und/oder des Trägers hergestellt worden sein. Beispielsweise können die Hülse und der Träger während ihres Zusammenbaus unterschiedliche Temperaturen aufweisen, wobei die Angleichung der Temperaturen und die damit einhergehende thermische Ausdehnung bzw. Kontraktion der Hülse und/oder des Trägers zu der gewünschten Verspannung bzw. Verpressung der Hülse und des Trägers miteinander führt. Die bevorzugt radialen Verbindungen zwischen der Hülse und dem Träger können prinzipiell als Spielpassung ausgebildet sein, um ein Fügen dieser Bauteile zu erleichtern.

Eine Schraubverbindung zwischen der Hülse und dem Träger kann insbesondere ein entlang des Außenumfangs oder des Innenumfangs der Hülse verlaufendes Außen- oder Innengewinde umfassen, sowie ein entsprechendes Gegengewinde des Trägers. Das Gewinde der Hülse ist vorzugsweise an einer radialen Außen- oder Innenseite des Trägers angeordnet und kann insbesondere in radialer Richtung vorstehende Gewindevorsprünge und entsprechende Gewindenuten umfassen.

Eine Verbindung zwischen der Hülse und dem Träger kann auch durch eine Verklebung, Verschweißung oder Verlötung gebildet sein.

Gemäß der Erfindung weist die Hülse zumindest einen und bevorzugt zumindest zwei Kopplungsabschnitte auf, welche mit dem Träger gekoppelt sind. Die zwei Kopplungsabschnitte können dabei in axialer Richtung voneinander beabstandet sein und jeweils an einem axialen Ende der Hülse angeordnet sein. Ein oder jeder Kopplungsabschnitt kann sich dabei in axialer Richtung über die Schutzwand der Hülse hinaus erstrecken und/oder sich in axialer Richtung an die Schutzwand anschließen.

Vorzugsweise bildet ein Kopplungsabschnitt der Hülse jeweils zumindest eine wie vorstehend beschriebene mechanisch feste Verbindung und/oder gasdichte Verbindung bzw. eine sowohl mechanisch feste als auch gasdichte Verbindung mit dem Träger. Der Träger kann dabei ebenfalls einen oder mehrere Kopplungsabschnitte aufweisen, die jeweils mit einem Kopplungsabschnitt der Hülse zusammenwirken, um die jeweilige eine oder die jeweiligen mehreren Verbindungen zu schaffen.

Gemäß der Erfindung ist ein Kopplungsabschnitt gegenüber der Schutzwand verstärkt ausgebildet. Dadurch kann auch bei einer geringen Wandstärke der Schutzwand eine stabile und zuverlässige mechanisch feste und/oder gasdichte Verbindung zwischen der Hülse und dem Träger geschaffen werden. Die Wand der vorzugsweise im Wesentlichen rotationssymmetrischen Hülse kann dabei einen im Wesentlichen C-förmigen, im Wesentlichen L-förmigen oder einen im Wesentlichen Z-förmigen Längsschnitt aufweisen, wobei ein oder ggf. beide kurzen Schenkel der C-, L-bzw. Z-Form jeweils durch einen Kopplungsabschnitt der Hülse gebildet sein können und der lange Schenkel die Schutzwand der Hülse umfassen kann.

Zwischen zwei in axialer Richtung beabstandeten und/oder an den axialen Enden der Hülse angeordneten Kopplungsabschnitten kann ein gasdicht geschlossener Aufnahmeraum der Kapselung ausgebildet sein, in dem der jeweilige Lagerteil aufgenommen ist.

Ein Kopplungsabschnitt der Hülse kann dabei einen, insbesondere radialen, Vorsprung bzw. Schulterabschnitt bilden, der eine Festlegung des jeweiligen Lagerteils in axialer Richtung bewirkt. Der jeweilige Lagerteil kann dabei mit einem seiner axialen Enden auf dem Kopplungsabschnitt aufliegen. Bei dieser Ausgestaltung kann zumindest an dem betreffenden axialen Ende des Lagerteils auf einen gesonderten Abschlussring des Trägers verzichtet werden, welcher andernfalls zur Bereitstellung einer axialen Festlegung des Lagerteils vorgesehen sein kann.

Vorzugsweise ist ein oder jeder Kopplungsabschnitt der Hülse zumindest näherungsweise rotationssymmetrisch und insbesondere im Wesentlichen ringförmig ausgebildet. Der Kopplungsabschnitt kann dabei eine radiale Innenfläche und/oder eine radiale Außenfläche aufweisen, die mit einer entsprechenden gegenüberliegenden radialen Außenfläche bzw. radialen Innenfläche eines Kopplungsabschnitts des Trägers zusammenwirkt, um die jeweilige Verbindung zu schaffen.

Beispielsweise kann ein bevorzugt ringförmiger Kopplungsabschnitt der Hülse in einem Schrumpf- oder Presssitz auf dem entsprechenden Kopplungsabschnitt des Trägers sitzen. Der Kopplungsabschnitt der Hülse kann dazu eine radiale Außenfläche oder Innenfläche aufweisen, die einen gegenüber der gegenüberliegenden radialen Innenfläche bzw. Außenfläche des Trägers geringfügig vergrößerten Durchmesser aufweist, so dass die Flächen unter einer in radialer Richtung orientierten Flächenpressung aneinander anliegen, welche eine mechanisch feste und/oder gasdichte Verbindung bewirkt. Auf diese Weise kann z.B. eine Verbindung zwischen der Hülse und dem Träger mit einer ringförmig geschlossenen Form geschaffen werden.

Ebenso kann in dem Kopplungsabschnitt ein wie vorstehend beschriebenes Innen- oder Außengewinde der Hülse vorgesehen sein, welches mit einem entsprechenden Gegengewinde des Trägers eine Verschraubung bildet.

Ferner kann zwischen dem Kopplungsabschnitt der Hülse und dem zugeordneten Kopplungsabschnitt des Trägers ein wie vorstehend beschriebenes Dichtungselement angeordnet sein, an dem die Hülse und der Träger jeweils dichtend anliegen. Ebenso kann der Kopplungsabschnitt der Hülse mit dem Kopplungsabschnitt des Trägers verklebt sein.

Gemäß einer vorteilhaften Ausführungsform ist die Wandstärke der Hülse bei montierter Kapselung verringert worden, insbesondere durch ein materialentfernendes Verfahren. Dabei kann die Wandstärke der Schutzwand über einen Teil oder die gesamte Schutzwand hinweg verringert worden sein. Dadurch, dass die Montage der Kapselung vor der Materialentfernung durchgeführt worden ist, wird infolge der größeren Stabilität der Hülse während der Montage eine verbesserte mechanisch feste und/oder gasdichte Verbindung zwischen der Hülse und dem Träger gewährleistet. Insbesondere wenn die Hülse durch eine Fügeverbindung mit dem Träger verbunden ist, ist eine gewisse ursprüngliche Mindestwandstärke der Hülse erforderlich, damit die Hülse den für eine zuverlässige Verbindung erforderlichen Kräften während des Fügeverfahrens standhalten kann, ohne zerstört zu werden. Die Materialentfernung kann beispielsweise durch ein spanabhebendes Verfahren wie beispielsweise Drehen oder Schleifen durchgeführt worden sein.

Die nachträgliche Verringerung der Wandstärke ermöglicht eine nahezu beliebig dünne Ausgestaltung der endgültigen Schutzwand und gleichzeitig eine hohe Festigkeit und Zuverlässigkeit der jeweiligen Verbindung bzw. Befestigung zwischen der Hülse und dem Träger. Die Wandstärke kann sogar so gering gewählt sein, dass sich die Hülse der jeweiligen Kapselung nicht mehr zerstörungsfrei abnehmen bzw. entfernen lässt. Eine geringe Wandstärke der Schutzwand ermöglicht eine geringe Breite eines zwischen den einander gegenüberliegenden Seitenflächen der Lagerteile ausgebildeten magnetischen Spalts. Dadurch können die durch die magnetische Abstoßung der Lagerteile erzeugbaren Lagerkräfte erhöht und die Lagerung somit verbessert werden.

Wie vorstehend beschrieben ist die Schutzwand vorzugsweise zumindest näherungsweise rotationssymmetrisch ausgestaltet. Die Schutzwand kann eine an die Form des von der Schutzwand gekapselten Lagerteils bzw. der Seitenfläche des Lagerteils angepasste Form aufweisen.

Der rotorseitige und/oder statorseitige Lagerteil kann jeweils prinzipiell eine rotationssymmetrische und insbesondere im Wesentlichen zylindermantelförmige Grundform aufweisen. Der rotorseitige und/oder statorseitige Lagerteil kann beispielsweise zumindest einen permanentmagnetischen Ring umfassen und kann insbesondere einen aus mehreren aufeinander gestapelten permanentmagnetischen Ringen gebildeten und vorzugsweise im Wesentlichen zylindermantelförmigen Ringstapel aufweisen. Die radiale Innenfläche oder die radiale Außenfläche des im Wesentlichen zylindermantelförmigen Lagerteils kann dabei eine dem jeweils anderen Lagerteil zugewandte Seitenfläche bilden, die durch die Kapselung geschützt wird.

Die Schutzwand einer Kapselung ist vorzugsweise im Wesentlichen zylindermantelförmig ausgebildet und kann beispielsweise koaxial zu der Rotationsachse der Pumpe angeordnet sein. Die Schutzwand ist dabei durch eine wie vorstehend beschriebene Hülse gebildet.

Die Schutzwand bildet vorzugsweise eine innere oder eine äußere zylindermantelförmige Ummantelung für die Seitenfläche des jeweiligen Lagerteils. Die Schutzwand und der Lagerteil können dabei als koaxial zueinander und konzentrisch ineinander angeordnete Zylindermäntel ausgebildet sein.

Die von der Schutzwand abgedeckte und vorzugsweise im Wesentlichen zylindermantelförmige Seitenfläche kann dabei durch die radiale Innenfläche oder Außenfläche des jeweiligen Lagerteils gebildet sein, je nachdem welche dieser Flächen dem jeweils anderen Lagerteil zugewandt ist. Dabei kann eine radiale Innenfläche oder Außenfläche der Schutzwand zumindest über einen Teil und vorzugsweise die gesamte Seitenfläche des Lagerteils hinweg parallel zu der Seitenfläche verlaufen und insbesondere direkt an der Seitenfläche des Magnetlagerteils anliegen.

Wie vorstehend beschrieben, bildet die Kapselung für den rotorseitigen und/oder statorseitigen Lagerteil vorzugsweise einen gasdicht geschlossenen Aufnahmeraum, in dem der jeweilige Lagerteil aufgenommen ist. Die Form des Aufnahmeraums ist dabei vorzugsweise an die Form des Lagerteils angepasst und kann dieser im Wesentlichen entsprechen.

Der Aufnahmeraum der Kapselung kann dementsprechend im Wesentlichen zylindermantelförmig ausgebildet sein. Die Schutzwand bildet bevorzugt eine der Seitenfläche des Lagerteils zugewandte Wand des Aufnahmeraums.

Beispielsweise kann die Schutzwand eine radiale Innenwand für den Aufnahmeraum bilden, insbesondere wenn die abzudeckende Seitenfläche des Lagerteils durch eine radiale Innenfläche des Lagerteils gebildet ist. Dabei kann eine vorzugsweise im Wesentlichen zylindermantelförmige radiale Außenfläche der Schutzwand den Aufnahmeraum in radialer Richtung nach innen hin begrenzen. Eine radiale Außenwand für den Aufnahmeraum kann durch einen Abschnitt des Trägers des jeweiligen Lagerteils gebildet sein. Dabei kann eine vorzugsweise im Wesentlichen zylindermantelförmige radiale Innenfläche des Trägers den Aufnahmeraum in radialer Richtung nach außen hin begrenzen. Die radiale Innenfläche des Trägers bzw. der diese radiale Innenfläche bildende Trägerabschnitt kann den gekapselten Lagerteil umschließen und den Lagerteil dadurch in radialer Richtung festlegen.

Entsprechend kann die Schutzwand eine radiale Außenwand für den Aufnahmeraum bilden, insbesondere wenn die abzudeckende Seitenfläche des Lagerteils durch eine radiale Außenfläche des Lagerteils gebildet ist. Dabei kann eine vorzugsweise im Wesentlichen zylindermantelförmige radiale Innenfläche der Schutzwand den Aufnahmeraum in radialer Richtung nach außen hin begrenzen. Eine radiale Innenwand für den Aufnahmeraum kann durch einen Abschnitt des Trägers des jeweiligen Lagerteils gebildet sein. Dabei kann eine vorzugsweise im Wesentlichen zylindermantelförmige radiale Außenfläche des Trägers den Aufnahmeraum in radialer Richtung nach innen hin begrenzen. Die radiale Außenfläche des Trägers bzw. der diese radiale Außenfläche bildende Trägerabschnitt kann sich dabei in das Innere des gekapselten Lagerteils hinein bzw. durch das Innere des gekapselten Lagerteils hindurch erstrecken und den Lagerteil dadurch in radialer Richtung festlegen.

In axialer Richtung kann der Aufnahmeraum an einem und vorzugsweise an jedem axialen Ende durch eine bevorzugt ringförmige Deckfläche begrenzt sein. Diese Deckfläche kann beispielsweise ganz oder teilweise durch einen Schulterabschnitt des Trägers gebildet sein, welcher insbesondere eine axiale Festlegung des Trägerteils bewirken kann, oder durch einen Kopplungsabschnitt der Hülse, welcher ebenfalls schulterförmig ausgebildet sein kann und einen radialen Vorsprung der Hülse bilden kann.

Vorzugsweise ist der zylindermantelförmige Aufnahmeraum an einem oberen und an einem unteren axialen Ende jeweils durch eine geschlossen ringförmige gasdichte Verbindung zwischen der Hülse und dem Träger gasdicht abgedichtet, wobei die gasdichten Verbindungen jeweils durch eine wie vorstehend beschriebene Verbindung zwischen einem Kopplungsabschnitt der Hülse und einem Kopplungsabschnitt des Trägers gebildet sein können.

Vorzugsweise erstreckt sich die Schutzwand der Kapselung für den rotorseitigen Teil des Magnetlagers und/oder die Schutzwand der Kapselung für den statorseitigen Teil des Magnetlagers in einem magnetischen Spalt, der zwischen den gegenüberliegenden und einander zugewandten Seitenflächen der beiden Magnetlagerteile ausgebildet ist.

Zwischen den Schutzwänden der Kapselungen kann ein freier Luftspalt verbleiben, welcher eine gegenüber dem magnetischen Spalt verringerte Spaltbreite aufweist und welcher eine berührungsfreie gegenseitige Bewegung der beiden Lagerteile zueinander ermöglicht. Der verbleibende freie Luftspalt kann eine Breite von bis zu 1 mm aufweisen.

Der magnetische Spalt kann im Wesentlichen rotationssymmetrisch und insbesondere im Wesentlichen zylindermantelförmig ausgebildet sein und kann durch zwei koaxial zueinander sowie zu der Rotationsachse orientierte und konzentrisch ineinander angeordnete, im Wesentlichen zylindermantelförmige Lagerteile, insbesondere Magnetringstapel, gebildet sein.

Der Luftspalt kann ebenfalls im Wesentlichen rotationssymmetrisch und insbesondere im Wesentlichen zylindermantelförmig ausgebildet sein und kann durch zwei koaxial zueinander und zu der Rotationsachse orientierte und konzentrisch ineinander angeordnete, im Wesentlichen zylindermantelförmige Schutzwände für die beiden Lagerteile ausgebildet sein.

Gemäß einer beispielhaften Ausführungsform sind sowohl der rotorseitige Lagerteil und die zugehörige Schutzwand als auch der statorseitige Lagerteil und die zugehörige Schutzwand jeweils im Wesentlichen zylindermantelförmig ausgebildet und koaxial zueinander und zu der Rotationsachse orientiert sowie konzentrisch ineinander angeordnet.

Eine oder jede Schutzwand kann prinzipiell aus einem beliebigen Material gebildet sein, welches gasdichte Eigenschaften besitzt. Das Material ist bevorzugt nicht magnetisch und weist vorzugsweise auch keine ferromagnetischen Eigenschaften auf. Bevorzugt ist die Schutzwand insgesamt bzw. eine die Schutzwand bildende Hülse aus einem metallischen Material gebildet. Ein solches Material eignet sich besonders, um eine wie vorstehend beschriebene Fügeverbindung zwischen der Hülse und dem Träger herzustellen.

Um den Schutz des rotorseitigen bzw. statorseitigen Lagerteils vor den durch die Pumpe geförderten Medien noch weiter zu verbessern, kann das jeweilige Lagerteil eine zusätzliche Schutzbeschichtung aufweisen, die das permanentmagnetische Material des Lagerteils vor den geförderten Medien schützt. Eine solche Schutzbeschichtung kann beispielsweise eine galvanisch aufgebrachte Nickelschicht oder eine Fluorpolymerschicht umfassen. Die Seitenfläche des jeweiligen Lagerteils kann dabei ganz oder teilweise durch die Schutzbeschichtung gebildet sein.

Weiterer Gegenstand der Erfindung ist ein Verfahren zur Herstellung einer Vakuumpumpe, insbesondere einer Turbomolekularpumpe, oder einer Rotationseinheit für eine Vakuumpumpe, insbesondere für eine Turbomolekularpumpe, mit den Merkmalen des Anspruchs 9.

Die Vakuumpumpe umfasst einen Rotor, einen Stator und ein Magnetlager, welches einen rotorseitigen Lagerteil und einen statorseitigen Lagerteil umfasst, wobei der rotorseitige Lagerteil und der statorseitige Lagerteil einander gegenüberliegende Seitenflächen aufweisen. Gemäß dem Verfahren wird eine gasdichte Kapselung für den rotorseitigen Lagerteil und/oder eine gasdichte Kapselung für den statorseitigen Lagerteil vorgesehen, indem eine Schutzwand der Kapselung zwischen den einander gegenüberliegenden Seitenflächen der Lagerteile angeordnet wird.

Das erfindungsgemäße Verfahren eignet sich zur Herstellung einer wie vorstehend beschriebenen erfindungsgemäßen Vakuumpumpe bzw. einer erfindungsgemäßen Rotoreinheit für eine Vakuumpumpe. Die hierin in Bezug auf die Vakuumpumpe bzw. Rotationseinheit beschriebenen vorteilhaften Ausführungsformen und Vorteile stellen bei entsprechender Anwendung vorteilhafte Ausführungsformen und Vorteile des erfindungsgemäßen Verfahrens dar. Dies gilt insbesondere für die vorstehend beschriebene Herstellung einer gasdichten Verbindung zwischen der Hülse einer Kapselung und dem Träger eines Lagerteils und für die Befestigung der Hülse an dem Träger.

Gemäß einer vorteilhaften Ausführungsform wird die Schutzwand von einer Hülse gebildet, die an einem Träger für den rotorseitigen oder statorseitigen Lagerteil des Magnetlagers befestigt wird, wobei die Wandstärke der Hülse und insbesondere der Schutzwand der Hülse nach dem Befestigen der Hülse an dem Träger verringert wird. Die Verringerung der Wandstärke erfolgt dabei vorzugsweise durch ein materialentfernendes Verfahren. Dadurch kann eine besonders wirksame und zuverlässige Befestigung erreicht werden, wobei gleichzeitig eine Kapselung mit einer geringen Wandstärke erzielt wird, wodurch ein entsprechend großer Luftspalt zwischen den Kapselungen und damit eine gegen Stöße und Vibrationen robuste Konstruktion realisierbar ist.

Nachfolgend wird die vorliegende Erfindung beispielhaft anhand einer vorteilhaften Ausführungsform unter Bezugnahme auf die beigefügten

### Figuren beschrieben. Es zeigen:

- Fig. 1: eine Vakuumpumpe gemäß einer Ausführungsform der Erfindung in einer geschnittenen Darstellung,
- Fig. 2: einen Ausschnitt der in Fig. 1 dargestellten Vakuumpumpe in einer geschnittenen Darstellung,
- Fig. 3: einen einzelnen Permanentmagnetring in perspektivischer Darstellung,
- Fig. 4: ein Ausschnitt der in Fig. 1 und 2 dargestellten Vakuumpumpe mit einem Magnetlager und zwei Kapselungen im Längsschnitt,
- Fig. 5: einen Teil der in Fig. 1, 2 und 4 dargestellten Vakuumpumpe mit einer rotorseitigen Kapselung im Längsschnitt,
- Fig. 6: den in Fig. 5 gezeigten Teil der Vakuumpumpe nach einer Reduzierung der Wandstärke der Kapselung,
- Fig. 7: einen Teil der in Fig. 1, 2 und 4 bis 6 dargestellten Vakuumpumpe mit einer statorseitigen Kapselung im Längsschnitt, und
- Fig. 8: den in Fig. 7 gezeigten Teil der Vakuumpumpe nach einer Reduzierung der Wandstärke der Kapselung.

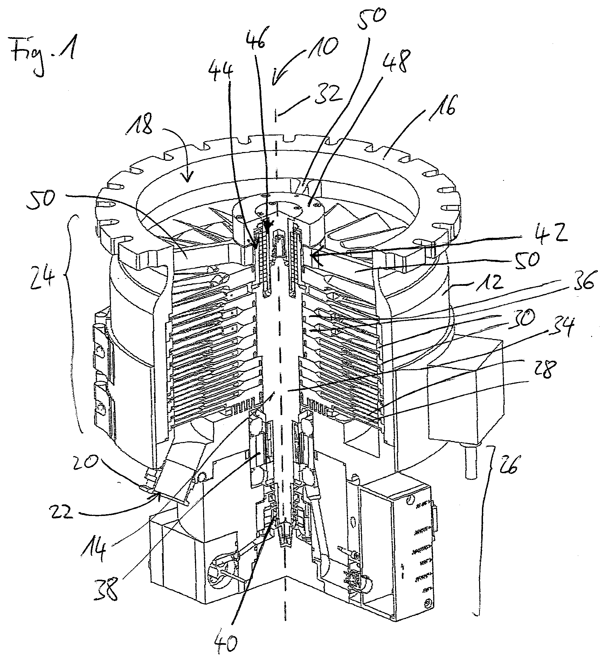

Fig. 1 zeigt eine als Turbomolekularpumpe ausgebildete Vakuumpumpe 10 in einer keilförmig aufgeschnittenen Darstellung.

Die Vakuumpumpe 10 umfasst einen Stator, welcher einen Teil eines mehrteiligen Pumpengehäuses 12 umfasst, sowie einen Rotor 14, der gegenüber dem Stator drehend antreibbar gelagert ist.

Die Vakuumpumpe 10 umfasst an ihrer Hochvakuumseite einen von einem Saugflansch 16 umgebenen Pumpeneinlass 18 zur Verbindung mit einem zu evakuierenden Volumen und einen im Bereich der Vorvakuumseite der Vakuumpumpe 10 angeordneten, von einem Vorvakuumflansch 20 umgebenen Pumpenauslass 22.

Der Stator und der Rotor 14 bilden zusammen eine Rotationseinheit 24 der Vakuumpumpe 10, die mit einem Basisabschnitt bzw. Unterteil 26 der Pumpe 10 lösbar verbunden ist.

Der Stator umfasst mehrere Statorscheiben 28, die in dem Gehäuse 12 angeordnet und über Distanzelemente 30 in einem definierten Abstand zueinander gehalten sind.

Der um die Rotationsachse 32 drehbar gelagerte Rotor 14 umfasst eine Rotorwelle 34, welche mehrere Rotorscheiben 36 trägt, wobei jeweils eine Rotorscheibe 36 in dem Zwischenraum zwischen zwei Statorscheiben 28 angeordnet ist. Die Statorscheiben 28 und Rotorscheiben 36 weisen jeweils eine mehrere Schaufeln umfassende pumpaktive Struktur auf, so dass eine Statorscheibe 28 jeweils mit einer benachbarten Rotorscheibe 36 eine Pumpstufe der Turbomolekularpumpe 10 bildet.

In dem Unterteil 26 ist eine Antriebseinheit 38 angeordnet, die beispielsweise einen Elektromotor umfassen kann und die dazu ausgebildet ist, den Rotor 14 zur Bereitstellung der Pumpwirkung drehend anzutreiben.

Ferner weist die Pumpe 10 ein vorvakuumseitiges Lager 40 auf, welches zur drehbaren Lagerung des Rotors 14 gegenüber dem Stator ausgebildet ist. Das vorvakuumseitige Lager 40 ist dazu eingerichtet, radiale und axiale Lagerkräfte aufzunehmen und ist vorliegend als geschmiertes Wälzlager ausgebildet.

An der Hochvakuumseite weist die Pumpe 10 ein weiteres, als Permanentmagnetlager ausgebildetes Lager 42 auf, das einen rotorseitigen Lagerteil 44 und einen statorseitigen Lagerteil 46 umfasst und das eine drehbare Lagerung des Rotors 14 gegenüber dem Stator bewirkt.

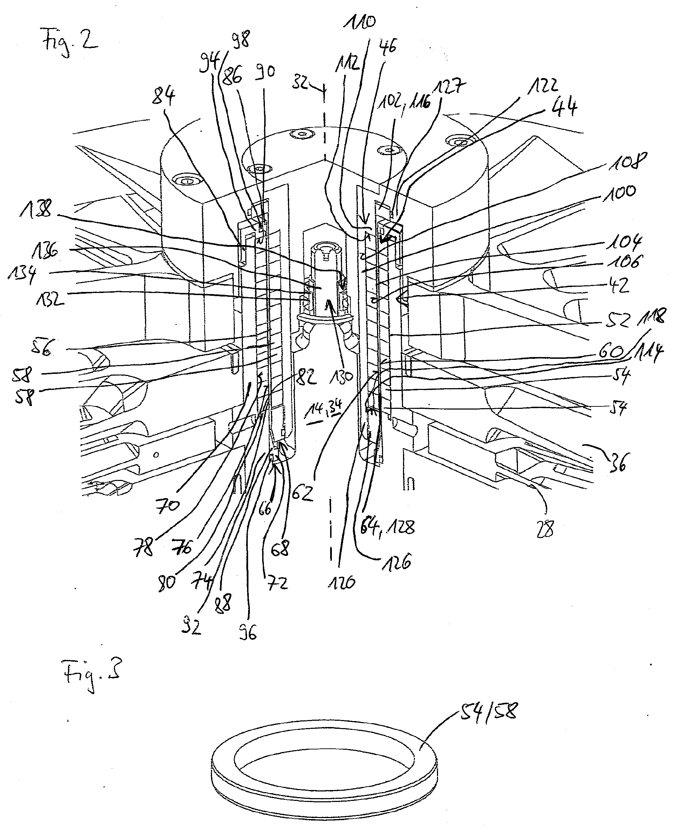

Der statorseitige Lagerteil 46 ist dabei an einer Aufhängung 48 angebracht, die in der Mitte einer den Pumpeneinlass 18 bildenden Öffnung angeordnet ist und über mehrere in der Öffnung angeordnete radiale Streben 50 mit dem Gehäuse 12 verbunden ist. Die Pumpe 10 weist eine gasdichte Kapselung 66 (siehe z.B. Fig. 2) für den rotorseitigen Lagerteil 44 und eine gasdichte Kapselung 68 (siehe z.B. Fig. 2) für den statorseitigen Lagerteil 46 auf, die nachfolgend unter Bezugnahme auf Fig. 2 bis 8 genauer erläutert sind.

Fig. 2 zeigt einen das Magnetlager 42 enthaltenden Ausschnitt der Pumpe 10 von Fig. 1 in vergrößerter Darstellung. Das Lager 42 umfasst einen rotorseitigen Magnetringstapel 52 aus mehreren permanentmagnetischen Rotormagnetringen 54, die den rotorseitigen Lagerteil 44 bilden, und einen statorseitigen Magnetringstapel 56 aus mehreren permanentmagnetischen Statormagnetringen 58, die den statorseitigen Lagerteil 46 bilden. Die Magnetringe 54, 58 eines Stapels 52, 56 sind dabei in axialer Richtung aufeinander gestapelt und bilden eine zumindest näherungsweise zylindermantelförmige Grundform des jeweiligen Stapels 52, 56. Fig. 3 zeigt eine perspektivische Darstellung einer beispielhaften Ausführung eines geeigneten permanentmagnetischen Rings 54 bzw. 58.

Der im Wesentlichen zylindermantelförmige Rotorstapel 52 und der im Wesentlichen zylindermantelförmige Statorstapel 56 sind im Wesentlichen koaxial zueinander und jeweils im Wesentlichen koaxial zu der Rotationsachse 32 der Pumpe 10 angeordnet. Der Statorstapel 56 ist innerhalb des Rotorstapels 52 angeordnet, so dass die im Wesentlichen zylindermantelförmige radiale Innenfläche 60 des Rotorstapels 52 der ebenfalls im Wesentlichen zylindermantelförmigen radialen Außenfläche 62 des Statorstapels 56 gegenüberliegt. Die radiale Innenfläche 60 des Rotorstapels 52 und die radiale Außenfläche 62 des Statorstapels 56 bilden somit einander gegenüberliegende Seitenflächen des rotorseitigen Lagerteils 44 und des statorseitigen Lagerteils 46.

Zwischen der radialen Innenfläche 60 des Rotorstapels 52 und der radialen Außenfläche 62 des Statorstapels 56 ist ein zumindest näherungsweise zylindermantelförmiger radialer magnetischer Spalt 64 ausgebildet, der durch die Magnetringe 54, 58 der Stapel 52, 56 begrenzt wird.

Die Pumpe 10 umfasst eine gasdichte Kapselung 66 für den rotorseitigen Lagerteil 44 und eine gasdichte Kapselung 68 für den statorseitigen Lagerteil 46, welche den jeweils gekapselten Lagerteil 44 bzw. 46 und insbesondere dessen Seitenfläche 60 bzw. 62 vor dem Kontakt mit den von der Pumpe 10 geförderten Medien schützt.

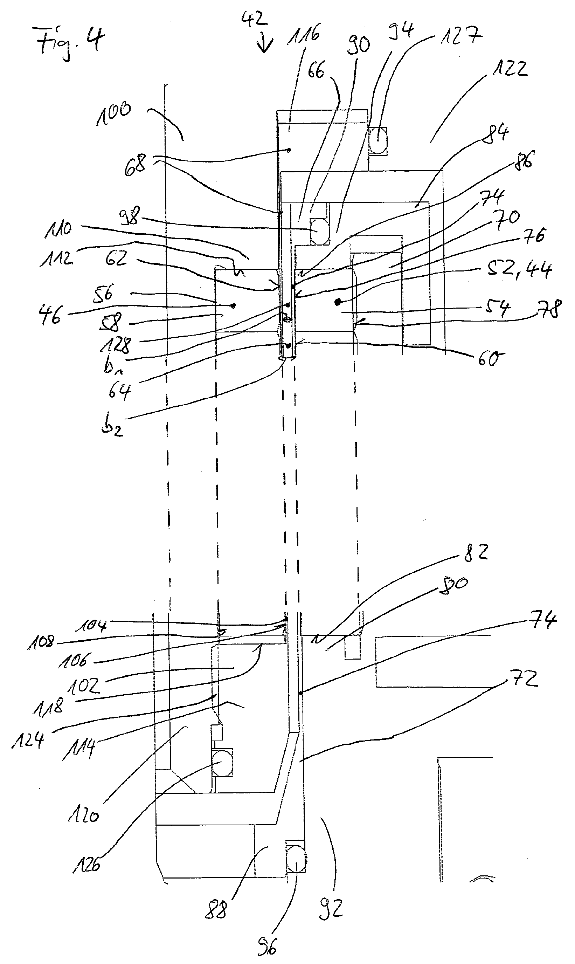

Fig. 4 zeigt eine gegenüber Fig. 2 vergrößerte Darstellung eines Ausschnitts der Pumpe 10 einschließlich der wesentlichen Bestandteile der rotorseitigen Kapselung 66 und der statorseitigen Kapselung 68 im Längsschnitt.

Die rotorseitige Kapselung 66 umfasst einen zumindest näherungsweise rotationssymmetrischen Träger 70 für den rotorseitigen Lagerteil 44 und eine im Wesentlichen rotationssymmetrische rotorseitige Hülse 72. Die Hülse 72 umfasst eine im Wesentlichen zylindermantelförmige Schutzwand 74, die die radiale Innenfläche 60 des Rotorstapels 52 abdeckt. Die Schutzwand 74 ist in der vergrößerten Darstellung von Fig. 4 besonders deutlich sichtbar. Der Träger 70 und die Hülse 72 bilden einen gasdicht geschlossenen Aufnahmeraum, in dem der rotorseitige Lagerteil 44 aufgenommen ist und der entsprechend der Form des rotorseitigen Lagerteils 44 zumindest näherungsweise zylindermantelförmig ausgestaltet ist.

Eine im Wesentlichen zylindermantelförmige radiale Außenfläche 76 der Schutzwand 74 begrenzt den Aufnahmeraum radial nach innen hin. Der Träger 70 weist eine im Wesentlichen zylindermantelförmige radiale Innenfläche 78 auf, die den Aufnahmeraum radial nach außen hin begrenzt. Die radiale Innenfläche 78 des Trägers 70 bewirkt dabei gleichzeitig eine Festlegung der Rotorringe 54 in radialer Richtung, wobei die Rotorringe 54 an der radialen Innenfläche 78 des Trägers 70 anliegen können.

An dem unteren axialen Ende des Rotorstapels 52 ist ein Schulterabschnitt 80 des Trägers 70 vorgesehen, welcher eine ringförmige Deckfläche 82 bildet, die den Aufnahmeraum in axialer Richtung nach unten hin begrenzt. Der Schulterabschnitt 80 bewirkt gleichzeitig eine Festlegung der Rotorringe 54 in axialer Richtung. An dem oberen axialen Ende des Rotorstapels 52 ist ein Abschlussring 84 des Trägers 70 angeordnet, welcher eine ringförmige Deckfläche 86 bildet, die den Aufnahmeraum in axialer Richtung nach oben hin begrenzt. Der Abschlussring 84 ist auf den Abschnitt des Trägers 70 aufgepresst, der die radiale Innenfläche 78 bildet, kann alternativ aber auch in sonstiger Weise, insbesondere lösbar, z.B. durch Verschrauben, an diesem Abschnitt befestigt sein. Der Abschlussring 84 wird bei der Herstellung der Pumpe 10 nach dem Einsetzen der Rotorringe 54 in den Träger 70 aufgepresst und bewirkt eine Festlegung der Rotorringe 54 in axialer Richtung. Der Schulterabschnitt 80, der die radiale Innenfläche 78 bildende Abschnitt und der Abschlussring 84 des Trägers 70 definieren zusammen einen C-förmigen Querschnitt des Trägers 70.

Die Hülse 72 umfasst an ihrem oberen und ihrem unteren axialen Ende jeweils einen sich in axialer Richtung über die Schutzwand 74 hinaus erstreckenden ringförmigen Kopplungsabschnitt 88, 90, welcher gegenüber der Schutzwand 74 verstärkt ausgebildet ist, wie in Fig. 4 besonders deutlich zu sehen ist. Die Kopplungsabschnitte 88, 90 bilden dabei jeweils mit einem gegenüberliegenden Kopplungsabschnitt 92, 94 des Trägers 70 eine gasdichte Verbindung, welche den Aufnahmeraum für den Rotorstapel 52 nach außen hin gasdicht abdichtet. Zwischen einem Kopplungsabschnitt 88, 90 der Hülse 72 und dem entsprechenden Kopplungsabschnitt 92, 94 des Trägers 70 ist jeweils ein rotationssymmetrisches Dichtungselement 96, 98 in Form eines O-Rings angeordnet, an dem jeweils sowohl der Kopplungsabschnitt 88, 90 der Hülse 72 als auch der zugehörige Kopplungsabschnitt 92, 94 des Trägers 70 dichtend anliegen. Die Hülse 72 weist in den Kopplungsabschnitten 88, 90 jeweils ein radiales Übermaß auf, welches dazu führt, dass die Hülse 72 in den Kopplungsabschnitten 88, 90 jeweils unter einer radialen Spannung an dem Dichtungselement 96, 98 anliegt. Dadurch wird eine dichtende Anlage an dem Dichtungselement 96, 98 gewährleistet. Weiter wird eine Zentrierung und eine Fixierung der Hülse 72 erreicht.

Wie in Fig. 4 für den unteren Kopplungsabschnitt 88 gezeigt, kann ein Kopplungsabschnitt 88, 90 der Hülse 72 auch direkt an dem jeweils zugeordneten Kopplungsabschnitt 92, 94 des Trägers 70 anliegen, und zwar vorzugsweise unter einer radialen mechanischen Spannung. Dadurch kann sowohl eine zusätzliche Dichtwirkung als auch eine mechanische Befestigung der Hülse 72 an dem Träger 70 bewirkt werden. Der Kopplungsabschnitt 88, 90 der Hülse 72 kann dabei z.B. in einem Press- oder Schrumpfsitz an dem Kopplungsabschnitt 92, 94 des Trägers 70 befestigt sein. Um die gewünschte mechanische Pressung zu erhalten, kann der jeweilige Kopplungsabschnitt 88, 90 der Hülse 72 dabei in dem Bereich seiner direkten Anlage an dem Kopplungsabschnitt 92, 94 des Trägers 70 ein radiales Übermaß gegenüber dem Kopplungsabschnitt 92, 94 des Trägers 70 aufweisen.

Der die Schutzwand 74 bildende Abschnitt und die sich daran anschließenden Kopplungsabschnitte 88, 90 der Hülse 72 definieren zusammen eine im Wesentlichen Z-förmige Längsschnittform der zumindest näherungsweise rotationssymmetrischen Hülse 72, wobei die kurzen Schenkel der Z-Form durch die Kopplungsabschnitte 88, 90 gebildet sind und der lange Schenkel der Z-Form die Schutzwand 74 umfasst.

Die statorseitige Kapselung 68 ist ähnlich aufgebaut wie die rotorseitige Kapselung 66.

Die statorseitige Kapselung 68 umfasst einen zumindest näherungsweise rotationssymmetrischen Träger 100 für den statorseitigen Lagerteil 46 und eine im Wesentlichen rotationssymmetrische statorseitige Hülse 102. Die Hülse 102 umfasst eine im Wesentlichen zylindermantelförmige Schutzwand 104, die die radiale Außenfläche 62 des Statorstapels 56 abdeckt. Die Schutzwand 104 ist in Fig. 4 besonders gut sichtbar. Der Träger 100 und die Hülse 102 bilden einen gasdicht geschlossenen Aufnahmeraum, in dem der statorseitige Lagerteil 46 aufgenommen ist und der entsprechend der Form des statorseitigen Lagerteils 46 zumindest näherungsweise zylindermantelförmig ausgestaltet ist.

Eine im Wesentlichen zylindermantelförmige radiale Innenfläche 106 der Schutzwand 104 begrenzt den Aufnahmeraum dabei radial nach außen hin. Der Träger 100 weist eine im Wesentlichen zylindermantelförmige radiale Außenfläche 108 auf, die den Aufnahmeraum radial nach innen hin begrenzt. Die radiale Außenfläche 108 des Trägers 100 bewirkt dabei gleichzeitig eine Festlegung der Statorringe 58 in radialer Richtung, wobei die Statorringe 58 an der radialen Außenfläche 108 anliegen können.

An dem oberen axialen Ende des Statorstapels 56 ist ein Schulterabschnitt 110 des Trägers 100 angeordnet, welcher eine ringförmige Deckfläche 112 bildet, die den Aufnahmeraum in axialer Richtung nach oben hin begrenzt. Der Schulterabschnitt 110 bewirkt gleichzeitig eine Festlegung der Statorringe 58 in axialer Richtung.

An dem unteren axialen Ende des Statorstapels 56 ist einer von zwei Kopplungsabschnitten 114, 116 der Hülse 102 ausgebildet, die sich jeweils an einem axialen Ende der Hülse 102 in axialer Richtung über die Schutzwand 104 hinaus erstrecken. Die Kopplungsabschnitte 114, 116 und der die Schutzwand 104 bildende Hülsenabschnitt definieren zusammen eine im Wesentlichen Z-förmige Längsschnittform der Hülse 102, wobei die Kopplungsabschnitte 114, 116 die kurzen Schenkel der Z-Form bilden und der lange Schenkel der Z-Form die Schutzwand 104 umfasst.

Der untere Kopplungsabschnitt 114 bildet eine ringförmige Deckfläche 118, die den Aufnahmeraum für den Statorstapel 56 in axialer Richtung begrenzt. Der Kopplungsabschnitt 114 bewirkt dabei eine Festlegung der Statorringe 58 in axialer Richtung.

Die Kopplungsabschnitte 114, 116 sind jeweils gegenüber der Schutzwand 104 verstärkt ausgebildet und bilden mit einem entsprechenden Kopplungsabschnitt 120, 122 des Trägers 100 eine gasdichte Verbindung, welche den Aufnahmeraum für den Statorstapel 56 nach außen hin abdichtet.

Der untere Kopplungsabschnitt 114 der Hülse 102 umfasst ein in Fig. 4 gezeigtes, an der radialen Innenseite der Hülse 102 angeordnetes und in Umfangsrichtung der Hülse 102 umlaufendes Innengewinde 124 mit mehreren, in Fig. 4 nicht eigens dargestellten radialen Gewindevorsprüngen und -vertiefungen. Das Innengewinde 124 ist mit einem an dem zugehörigen Kopplungsabschnitt 120 des Trägers 100 angeordneten, komplementären Außengewinde verschraubt, wodurch eine mechanisch feste und weitgehend gasdichte Verbindung zwischen den Kopplungsabschnitten 114, 120 geschaffen wird.

Der obere Kopplungsabschnitt 116 der Hülse 102 liegt direkt und unter einer durch ein radiales Übermaß des Kopplungsabschnitts 116 hervorgerufenen Pressspannung an dem zugehörigen Kopplungsabschnitt 122 des Trägers 100 an und ist dadurch mechanisch fest und gasdicht mit dem Kopplungsabschnitt 122 verbunden.

Zwischen den miteinander verbundenen Kopplungsabschnitten 114 und 120 bzw. 116 und 122 sind ferner Dichtungselemente 126, 127 in Form von O-Ringen vorgesehen, an denen die Kopplungsabschnitte 114 und 120 bzw. 116 und 122 jeweils dichtend anliegen, wodurch eine noch bessere gasdichte Verbindung geschaffen wird.

Wie in Fig. 2 und 4 gezeigt, sind die Hülsen 72 und 102 innerhalb des durch die Magnetringstapel 52 und 56 gebildeten magnetischen Spalts 64 angeordnet. Die Schutzwände 74, 104 der Hülsen 72 und 102 liegen direkt an den Seitenflächen 60, 62 der Magnetringstapel 52 und 56 an und weisen zwischen den Kopplungsabschnitten eine im Wesentlichen konstante Wandstärke auf, so dass zwischen den Schutzwänden 74, 104 ein freier Luftspalt 128 verbleibt, welcher ebenso wie der magnetische Spalt 64 im Wesentlichen zylindermantelförmig ausgebildet ist. Die Schutzwände 74, 104 weisen eine derart geringe Wandstärke auf, dass die in Fig. 4 gezeigte Spaltbreite b₁ des Luftspalts 128 gegenüber der Breite b₂ des magnetischen Spalts 64 nur geringfügig verringert ist. Hierdurch wird selbst bei einer geringen Spaltbreite b₂ des magnetischen Spalts 64 eine Kollision des Rotors und des Stators im Bereich der Schutzwände 74, 104 zuverlässig vermieden.

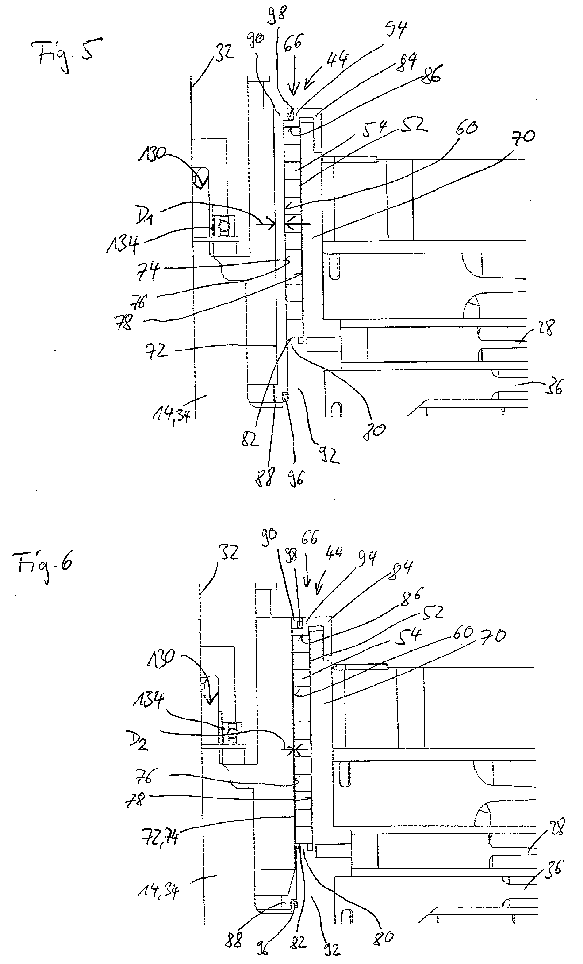

Fig. 5 bis 8 veranschaulichen ein erfindungsgemäßes Verfahren zur Herstellung einer wie in Fig. 1, 2 und 4 gezeigten Pumpe 10 mit einer geringen Wandstärke der Schutzwände 74, 104. Fig. 5 bis 8 zeigen jeweils einen Ausschnitt der Pumpe 10 während unterschiedlicher Herstellungsstadien. Der besseren Übersichtlichkeit halber ist in Fig. 5 bis 8 jeweils nur die rechte Hälfte der Pumpe 10 dargestellt.

Fig. 5 zeigt den rotorseitigen Teil der Pumpe 10 unmittelbar nach dem Befestigen der Hülse 72 an dem Träger 70. Die Hülse 72 wird durch einen Press-Füge-Prozess an dem Träger 70 befestigt, wobei eine erhebliche Krafteinwirkung erfolgt, insbesondere um den Kopplungsabschnitt 88 im Presssitz an dem Kopplungsabschnitt 92 des Trägers 70 zu befestigen.

Wie in Fig. 5 gezeigt weist die Schutzwand 74 der Hülse 72 eine relativ hohe ursprüngliche Wandstärke D1 auf, die es der Hülse 72 ermöglicht, den während des Press-Füge-Prozesses auftretenden Kräften standzuhalten.

Fig. 6 zeigt den in Fig. 5 gezeigten Teil der Pumpe 10 nach einem sich an das Befestigen der Hülse 72 an dem Träger 70 anschließenden Materialentfernungsschritt, welcher insbesondere ein Drehen oder Schleifen umfasst. Wie in Fig. 6 ersichtlich wird die Schutzwand 74 im Rahmen dieses Materialentfernungsschrittes auf eine deutlich geringere Wandstärke D₂ gebracht, welche die Realisierung eines magnetischen Spaltes 64 (siehe z.B. Fig. 4) mit erforderlicher Breite ermöglicht.

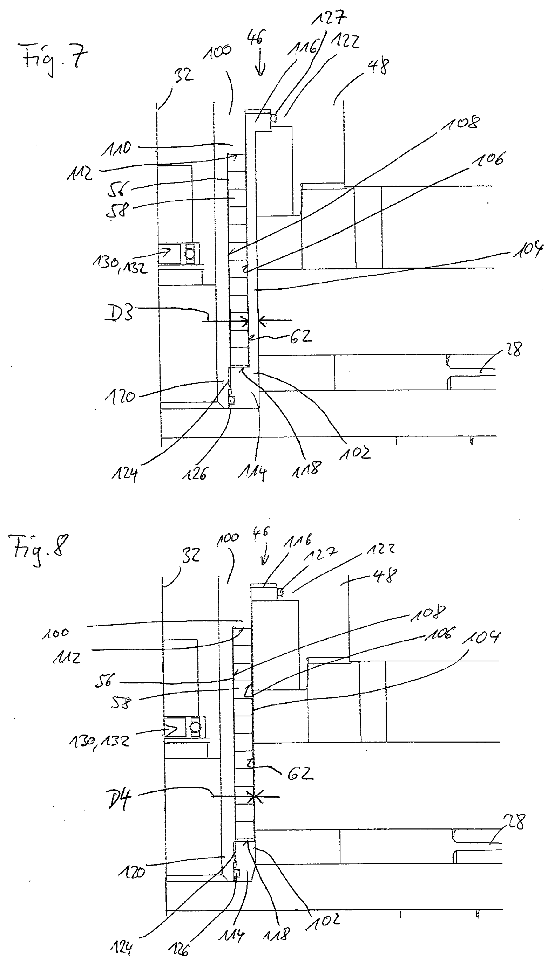

Fig. 7 zeigt den statorseitigen Teil der Pumpe 10 unmittelbar nach dem Befestigen der Hülse 102 an dem Träger 100. Die Hülse 102 wird durch eine Schraubverbindung 124 an dem Träger 100 befestigt, wobei zusätzlich in dem oberen axialen Endbereich eine Pressung erfolgt, so dass im Zuge der Befestigung eine erhebliche Krafteinwirkung auf die Hülse 102 stattfindet. Wie in Fig. 7 gezeigt, weist die Schutzwand 104 der Hülse 102 eine relativ hohe ursprüngliche Wandstärke D₃ auf, die es der Hülse 102 ermöglicht, den während der Befestigung auftretenden Kräften standzuhalten.

Fig. 8 zeigt den in Fig. 7 gezeigten Teil der Pumpe 10 nach einem sich an das Befestigen der Hülse 102 an dem Träger 100 anschließenden Materialentfernungsschritt, welcher insbesondere ein Drehen oder Schleifen umfasst. Wie in Fig. 8 ersichtlich, wird die Schutzwand 104 im Rahmen dieses Materialentfernungsschrittes auf eine deutlich geringere Wandstärke D₄ gebracht, welche die Realisierung eines magnetischen Spaltes 64 (siehe z.B. Fig. 4) mit erforderlicher Breite ermöglicht.

Die Pumpe 10 umfasst ein in Fig. 2 gezeigtes Fanglager 130, welches einen drehbaren Anschlag für den Rotor 14 bildet und eine radiale Bewegung des Stators und des Rotors 14 relativ zueinander begrenzt. Eine solche Bewegung kann z.B. durch während des Betriebs der Pumpe 10 auftretende Stöße oder Vibrationen hervorgerufen werden. Das Fanglager 130 ist dazu ausgebildet, zu verhindern, dass die beiden Hülsen 72, 102 und insbesondere deren Schutzwände 74, 104 infolge einer solchen radialen Relativbewegung mechanisch miteinander in Kontakt geraten und die Pumpe 10 dadurch beschädigt wird.

Das Fanglager 130 umfasst ein im Inneren des Permanentmagnetlagers 42 angeordnetes, als Kugellager ausgebildetes Wälzlager 132, welches die Aufhängung 48 bzw. den Träger 100 drehbar mit einer als Anschlag dienenden Fanghülse 134 verbindet. Der Rotor 14 weist einen Zapfenabschnitt 136 auf, der sich in die Fanghülse 134 hinein erstreckt. Zwischen der Fanghülse 134 und dem Zapfenabschnitt 136 ist im Ruhezustand bzw. bei gleichlaufendem Betrieb der Pumpe 10 ein ringförmiger freier Spalt 138 ausgebildet, so dass die Fanghülse 134 und der Zapfenabschnitt 136 sich in diesem Zustand nicht berühren und der Rotor 14 außer Eingriff mit dem Kugellager 132 steht. Erst bei einer radialen Auslenkung des Rotors 14 berühren sich die Fanghülse 134 und der Zapfenabschnitt 136, so dass der Rotor 14 mit dem Kugellager 132 in Eingriff gelangt und das Kugellager 132 mit der Fanghülse 134 einen radialen Anschlag für den Rotor 14 bildet, der eine Kollision der Hülsen 72, 102 verhindert. Der Spalt 138 kann dazu eine geringere radiale Spaltbreite aufweisen als der Luftspalt 128. Da der durch das Kugellager 132 gebildete Anschlag eine drehende Relativbewegung des Rotors 14 gegenüber dem Stator zulässt, wird eine abrupte Abbremsung des Rotors 14 bei dem Eingreifen des Fanglagers 130 vermieden. Das Kugellager 132 ist als nicht geschmiertes Kugellager 132 ausgebildet, so dass eine Verschmutzung des durch die Pumpe 10 erzeugten Vakuums ausgeschlossen ist.

### Bezugszeichenliste

- 10: Vakuumpumpe
- 12: Gehäuse
- 14: Rotor
- 16: Saugflansch
- 18: Pumpeneinlass
- 20: Vorvakuumflansch
- 22: Pumpenauslass
- 24: Rotationseinheit
- 26: Unterteil
- 28: Statorscheibe
- 30: Distanzelement
- 32: Rotationsachse
- 34: Rotorwelle
- 36: Rotorscheibe
- 38: Antriebseinheit
- 40: vorvakuumseitiges Lager
- 42: Permanentmagnetlager
- 44: rotorseitiger Lagerteil
- 46: statorseitiger Lagerteil
- 48: Aufhängung
- 50: Strebe
- 52: rotorseitiger Magnetringstapel
- 54: Rotormagnetring
- 56: statorseitiger Magnetringstapel
- 58: Statormagnetring
- 60: radiale Innenfläche
- 62: radiale Außenfläche
- 64: magnetischer Spalt
- 66: gasdichte Kapselung für den rotorseitigen Lagerteil
- 68: gasdichte Kapselung für den statorseitigen Lagerteil
- 70: Träger
- 72: Hülse
- 74: Schutzwand
- 76: radiale Außenfläche
- 78: radiale Innenfläche
- 80: Schulterabschnitt
- 82: Deckfläche
- 84: Abschlussring
- 86: Deckfläche
- 88, 90: Kopplungsabschnitt
- 92, 94: Kopplungsabschnitt
- 96, 98: Dichtungselement
- 100: Träger
- 102: Hülse
- 104: Schutzwand
- 106: radiale Außenfläche
- 108: radiale Innenfläche
- 110: Schulterabschnitt
- 112: Deckfläche
- 114, 116: Kopplungsabschnitt
- 118: Deckfläche
- 120, 122: Kopplungsabschnitt
- 124: Innengewinde
- 126, 127: Dichtungselement
- 128: Luftspalt
- 130: Fanglager
- 132: Wälzlager
- 134: Fanghülse
- 136: Zapfenabschnitt
- 138: Spalt
- b₁, b₂: Spaltbreite
- D₁, D₂, D₃, D₄: Wandstärke

## Patentansprüche

1. Vakuumpumpe (10), insbesondere Turbomolekularpumpe, oder Rotations-einheit (24) für eine Vakuumpumpe (10), insbesondere für eine Turbomolekularpumpe,
mit einem Rotor (14), einem Stator und einem Magnetlager (42), welches einen rotorseitigen Lagerteil (44) und einen statorseitigen Lagerteil (46) umfasst, wobei der rotorseitige Lagerteil (44) und der statorseitige Lagerteil (46) einander gegenüberliegende Seitenflächen (60, 62) aufweisen, wobei eine gasdichte Kapselung (66) für den rotorseitigen Lagerteil (44) und/oder eine gasdichte Kapselung (68) für den statorseitigen Lagerteil (46) vorgesehen ist, welche eine Schutzwand (74, 104) umfasst, die zwischen den einander gegenüberliegenden Seitenflächen (60, 62) der Lagerteile (44, 46) angeordnet ist,
wobei die Schutzwand (74, 104) durch eine Hülse (72, 102) gebildet ist,
wobei die Hülse (72, 102) von einem Träger (70, 100) für den rotorseitigen oder statorseitigen Lagerteil (44, 46) getragen ist und
wobei die Hülse (72, 102) zumindest einen Kopplungsabschnitt (88, 90, 114, 116) aufweist, welcher mit dem Träger (70, 100) gekoppelt ist,
**dadurch gekennzeichnet, dass**
der Kopplungsabschnitt gegenüber der Schutzwand verstärkt ausgebildet ist.

2. Vakuumpumpe nach Anspruch 1,
**dadurch gekennzeichnet, dass**
die Kapselung (66, 68) einen geschlossenen gasdichten Aufnahmeraum bildet, in dem der rotorseitige oder der statorseitige Lagerteil (44, 46) aufgenommen ist.

3. Vakuumpumpe nach Anspruch 1 oder 2, **dadurch gekennzeichnet, dass** die Hülse (72, 102) koaxial zu dem Magnetlager (42) angeordnet ist.

4. Vakuumpumpe nach zumindest einem der vorstehenden Ansprüche, **dadurch gekennzeichnet, dass** die Hülse (72, 102) mit dem Träger (70, 100) eine gasdichte Verbindung bildet, die vorzugsweise einen gasdichten Aufnahmeraum der Kapselung (66, 68) begrenzt.

5. Vakuumpumpe nach zumindest einem der vorstehenden Ansprüche, **dadurch gekennzeichnet, dass** die Hülse (72, 102) durch eine Fügeverbindung und/oder durch eine Verschraubung mit dem Träger (70, 100) verbunden ist.

6. Vakuumpumpe nach zumindest einem der vorstehenden Ansprüche, **dadurch gekennzeichnet, dass** die Hülse (72, 102) zwei Kopplungsabschnitte (88, 90, 114, 116) aufweist, welche mit dem Träger (70, 100) gekoppelt sind.

7. Vakuumpumpe nach zumindest einem der vorstehenden Ansprüche, **dadurch gekennzeichnet, dass** die Wandstärke (D₂, D₄) der Hülse (72, 102) bei montierter Kapselung (66, 68), insbesondere durch ein materialentfernendes Verfahren, verringert worden ist.

8. Verfahren zur Herstellung einer Vakuumpumpe (10), insbesondere einer Turbomolekularpumpe, oder einer Rotationseinheit (24) für eine Vakuumpumpe (10), insbesondere für eine Turbomolekularpumpe,
mit einem Rotor (14), einem Stator und einem Magnetlager (42), welches einen rotorseitigen Lagerteil (44) und einen statorseitigen Lagerteil (46) umfasst, wobei der rotorseitige und der statorseitige Lagerteil (44, 46) einander gegenüberliegende Seitenflächen (60, 62) aufweisen,
wobei eine gasdichte Kapselung (66) für den rotorseitigen Lagerteil (44) und/oder eine gasdichte Kapselung (68) für den statorseitigen Lagerteil (46) vorgesehen wird, indem eine Schutzwand (74, 104) der Kapselung (66, 68) zwischen den einander gegenüberliegenden Seitenflächen (60, 62) der Lagerteile (44, 46) angeordnet wird,
wobei die Schutzwand (74, 104) von einer Hülse (72, 102) gebildet wird, die an einem Träger (70, 100) für den rotorseitigen oder statorseitigen Lagerteil (44, 46) des Magnetlagers (42) befestigt wird,
und wobei die Hülse (72, 102) zumindest einen Kopplungsabschnitt (88, 90, 114, 116) aufweist, welcher mit dem Träger (70, 100) gekoppelt ist,
**dadurch gekennzeichnet, dass**
der Kopplungsabschnitt gegenüber der Schutzwand verstärkt ausgebildet ist.

9. Verfahren nach Anspruch 8,
**dadurch gekennzeichnet, dass** die Wandstärke (D₁, D₃) der Hülse (72, 102) nach dem Befestigen der Hülse (72, 102) an dem Träger (70, 100) durch ein materialentfernendes Verfahren verringert wird.

## Claims

1. A vacuum pump (10), in particular a turbomolecular pump, or a rotation unit (24) for a vacuum pump (10), in particular for a turbomolecular pump, having a rotor (14), a stator and a magnetic bearing (42) which comprises a rotor-side bearing part (44) and a stator-side bearing part (46), wherein the rotor-side bearing part (44) and the stator-side bearing part (46) have mutually oppositely disposed side surfaces (60, 62);
wherein a gastight encapsulation (66) for the rotor-side bearing part (44) and/or a gastight encapsulation (68) for the stator-side bearing part (46) is/are provided and comprises/comprise a protective wall (74, 104) which is arranged between the mutually oppositely disposed side surfaces (60, 62) of the bearing parts (44, 46);
wherein the protective wall (74, 104) is formed by a sleeve (72, 102); wherein the sleeve (72, 102) is supported by a support (70, 100) for the rotor-side bearing part or the stator-side bearing part (44, 46); and wherein the
sleeve (72, 102) has at least one coupling section (88, 90, 114, 116) which is coupled to the support (70, 100),
**characterized in that**
the coupling section is reinforced with respect to the protective wall.

2. A vacuum pump in accordance with claim 1,
**characterized in that**
the encapsulation (66, 68) forms a closed gastight reception space in which the rotor-side bearing part or the stator-side bearing part (44, 46) is received.

3. A vacuum pump in accordance with claim 1 or claim 2,
**characterized in that**
the sleeve (72, 102) is arranged coaxially to the magnetic bearing (42).

4. A vacuum pump in accordance with at least one of the preceding claims, **characterized in that**
the sleeve (72, 102) forms a gastight connection with the support (70, 100), which connection preferably bounds a gastight reception space of the encapsulation (66, 68).

5. A vacuum pump in accordance with at least one of the preceding claims, **characterized in that**
the sleeve (72, 102) is connected to the support (70, 100) by a joint connection and/or by a screw connection.

6. A vacuum pump in accordance with at least one of the preceding claims, **characterized in that**
the sleeve (72, 102) has two coupling sections (88, 90, 114, 116) which are coupled to the support (70, 100).

7. A vacuum pump in accordance with at least one of the preceding claims, **characterized in that**
the wall thickness (D₂, D₄) of the sleeve (72, 102) has been reduced, in particular by a material-removing process, with the encapsulation (66, 68) being mounted.

8. A method of manufacturing a vacuum pump (10), in particular a turbomolecular pump, or a rotation unit (24) for a vacuum pump (10), in particular for a turbomolecular pump,
having a rotor (14), a stator and a magnetic bearing (42) which comprises a rotor-side bearing part (44) and a stator-side bearing part (46), wherein the rotor-side bearing part and the stator-side bearing part (44, 46) have mutually oppositely disposed side surfaces (60, 62);
wherein a gastight encapsulation (66) for the rotor-side bearing part (44) and/or a gastight encapsulation (68) for the stator-side bearing part (46) is/are provided in that a protective wall (74, 104) of the encapsulation (66, 68) is arranged between the mutually oppositely disposed side surfaces (60, 62) of the bearing parts (44, 46);
wherein the protective wall (74, 104) is formed by a sleeve (72, 102) which is fastened to a support (70, 100) for the rotor-side bearing part or the stator-side bearing part (44, 46) of the magnetic bearing (42);
and wherein the sleeve (72, 102) has at least one coupling section (88, 90, 114, 116) which is coupled to the support (70, 100),
**characterized in that**
the coupling section is reinforced with respect to the protective wall.

9. A method in accordance with claim 8,
**characterized in that**
the wall thickness (D₁, D₃) of the sleeve (72, 102) is reduced by a material-removing process after the fastening of the sleeve (72, 102) to the support (70, 100).

## Revendications

1. Pompe à vide (10), en particulier pompe turbomoléculaire, ou unité de rotation (24) pour une pompe à vide (10), en particulier pour une pompe turbomoléculaire,
comportant un rotor (14), un stator et un palier magnétique (42) qui comprend une partie de palier (44) côté rotor et une partie de palier (46) côté stator, la partie de palier (44) côté rotor et la partie de palier (46) côté stator présentant des faces latérales (60, 62) opposées l'une à l'autre,
dans laquelle est prévu un encapsulage (66) étanche aux gaz pour la partie de palier (44) côté rotor et/ou un encapsulage (68) étanche aux gaz pour la partie de palier (46) côté stator, qui comprend une paroi de protection (74, 104) qui est agencée entre les faces latérales (60, 62) opposées l'une à l'autre des parties de palier (44, 46),
la paroi de protection (74, 104) est formée par une douille (72, 102),
la douille (72, 102) est supportée par un support (70, 100) pour la partie de palier (44, 46) côté rotor ou côté stator, et
la douille (72, 102) comprend au moins une portion de couplage (88, 90, 114, 116) qui est couplée au support (70, 100),
**caractérisée en ce que**
la portion de couplage est réalisée de façon renforcée par rapport à la paroi de protection.

2. Pompe à vide selon la revendication 1,
**caractérisée en ce que**
l'encapsulage (66, 68) forme un compartiment de logement fermé étanche aux gaz dans lequel est logée la partie de palier (44, 46) côté rotor ou côté stator.

3. Pompe à vide selon la revendication 1 ou 2,
**caractérisée en ce que**
la douille (72, 102) est agencée coaxialement au palier magnétique (42).

4. Pompe à vide selon l'une au moins des revendications précédentes, **caractérisée en ce que**
la douille (72, 102) forme une liaison étanche aux gaz avec le support (70, 100), qui délimite de préférence un compartiment de logement étanche aux gaz de l'encapsulage (66, 68).

5. Pompe à vide selon l'une au moins des revendications précédentes, **caractérisée en ce que**
la douille (72, 102) est reliée au support (70, 100) par une liaison d'assemblage et/ou par un vissage.

6. Pompe à vide selon l'une au moins des revendications précédentes, **caractérisée en ce que**
la douille (72, 102) comprend deux portions de couplage (88, 90, 114, 116) qui sont couplées au support (70, 100).

7. Pompe à vide selon l'une au moins des revendications précédentes, **caractérisée en ce que**
l'encapsulage (66, 68) étant monté, l'épaisseur de paroi (D₂, D₄) de la douille (72, 102) est réduite, en particulier par un procédé d'enlèvement de matière.

8. Procédé pour réaliser une pompe à vide (10), en particulier une pompe turbomoléculaire, ou une unité de rotation (24) pour une pompe à vide (10), en particulier pour une pompe turbomoléculaire, comportant un rotor (14), un stator et un palier magnétique (42) qui comprend une partie de palier (44) côté rotor et une partie de palier (46) côté stator, les parties de palier (44, 46) côté rotor et côté stator présentant des faces latérales (60, 62) opposées l'une à l'autre,
dans lequel on prévoit un encapsulage (66) étanche aux gaz pour la partie de palier (44) côté rotor et/ou un encapsulage (68) étanche aux gaz pour la partie de palier (46) côté stator, en agençant une paroi de protection (74, 104) de l'encapsulage (66, 68) entre les faces latérales (60, 62) opposées l'une à l'autre des parties de palier (44, 46),
la paroi de protection (74, 104) étant formée par une douille (72, 102),
qui est fixé sur un support (70, 100) pour la partie de palier (44, 46) côté rotor ou côté stator du palier magnétique (42), et
la douille (72, 102) comprend au moins une portion de couplage (88, 90, 114, 116) qui est couplée au support (70, 100),
**caractérisé en ce que**
la portion de couplage est réalisée de façon renforcée par rapport à la paroi de protection.

9. Procédé selon la revendication 8,
**caractérisé en ce que**
après avoir fixé la douillé (72, 102) sur le support (70, 100), on réduit l'épaisseur de paroi (D₁, D₃) de la douille (72, 102) par un procédé d'enlèvement de matière.
